# FASCICULE DE BREVET EUROPEEN

(11) **EP 2 673 945 B1**
(45) Date de publication et mention de la délivrance du brevet: **01.04.2020**
(21) Numéro de dépôt: 12708905.0
(22) Date de dépôt: 10.02.2012
(51) Int. Cl.: H04M 1/04, H04M 1/60, H04M 1/253, H04M 1/725, H04M 1/02

(54) **SYSTEME DE COMMUNICATION TELEPHONIQUE COMPRENANT UNE STATION D'ACCUEIL COMPORTANT UN LOGEMENT DESTINE A RECEVOIR UN TELEPHONE MOBILE**
TELEKOMMUNIKATIONSSYSTEM MIT ANDOCKSTATION MIT EINER AUSSPARUNG ZUR AUFNAHME EINES MOBILTELEFONS
TELEPHONE COMMUNICATION SYSTEM INCLUDING A DOCKING STATION COMPRISING A RECESS INTENDED FOR RECEIVING A MOBILE TELEPHONE

(30) Priorité: 11.02.2011 FR 1151124
(43) Date de publication de la demande: 18.12.2013
(73) Titulaire: Orange, 75015 Paris (FR)
(72) Inventeur: ZIMMERMANN, Julien, F-14460 Colombelles (FR); POLOUCHKINE, Stéphane, F-14860 Ranville (FR)
(74) Mandataire: Cabinet Beau de Loménie
(86) Numéro de dépôt international: PCT/FR2012/050300
(87) Numéro de publication internationale: WO 2012/107702

(56) Documents cités:
- EP-A2- 1 998 423
- WO-A1-01/29979
- US-A1- 2002 106 993
- US-A1- 2003 058 806
- US-A1- 2006 013 386
- US-B1- 6 978 154

## Description

La présente invention a trait au domaine des télécommunications et concerne en particulier les systèmes de communication téléphonique comprenant une station d'accueil destinée à recevoir un téléphone mobile, un combiné téléphonique utilisable en substitution du microphone et du haut-parleur d'un téléphone mobile inséré dans la station d'accueil, et une unité de commande incluant un clavier à touches utilisable en substitution du clavier du téléphone mobile inséré dans la station d'accueil.

On entend ici l'expression « téléphone mobile » comme désignant un dispositif de téléphonie fonctionnant selon un standard de téléphonie mobile tel que le standard GSM (*Global System for Mobile Communications*), GPRS (*General Packet Radio Service*), UMTS (*Universal Mobile Telecommunications System*), LTE (*Long Term Evolution*), ou selon une norme Wi-Fi (*Wireless Fidelity*).

De tels systèmes sont connus de l'état de la technique. En particulier, le document brevet US7110789 décrit une station d'accueil (*docking station* en anglais) comportant un logement dans lequel un appareil de communication sans fil, tel qu'un téléphone cellulaire, peut être inséré. La station d'accueil inclut une station de base et un combiné. Le combiné peut être couplé à la station de base par un cordon ou alternativement par une liaison sans fil (communication infrarouge ou par fréquences radio). La station de base peut également inclure un clavier à touches et des boutons fonctionnels fournissant des fonctions spécifiques comme l'accès à des messages vocaux, l'établissement d'une conférence téléphonique, mise en sourdine (*muting*), etc.

Les stations d'accueil pour téléphone mobile connues de l'état de la technique, présentent divers avantages pour l'utilisateur. En particulier, elles offrent la possibilité à l'utilisateur d'utiliser son téléphone mobile, lorsque ce dernier est inséré dans une station d'accueil disposant d'un combiné et d'un clavier, avec la même facilité qu'un téléphone fixe, c'est-à-dire un téléphone relié à un réseau téléphonique fixe tel qu'un réseau téléphonique commuté (RTC) ou un réseau de voix sur IP (VoIP - *Voice over Internet Protocol*). Par ailleurs, le téléphone mobile placé sur la station d'accueil est mis en charge automatiquement.

Cependant, on peut observer que dans ce type d'appareil téléphonique équipé d'un combiné et d'un clavier à touches, le combiné est généralement situé à gauche du clavier. Cette disposition est dictée notamment par le fait que la majorité des êtres humains sont droitiers, c'est-à-dire se servent mieux de la main droite que de la main gauche, et de ce fait sont enclins à se servir de la main gauche pour tenir le combiné tout en se servant de la main droite pour manipuler le clavier.

Le document US 2002/0106993 décrit une station d'accueil pour connecter des téléphones cellulaire avec un téléphone conventionnel. Le document US 2006/0013386 décrit un appareil de communication ayant un support de combiné amovible. Le document US 2003/0058806 décrit un système de communication multimédia. Le document US 6,978,154 décrit un système pour interfacer une installation de téléphone conventionnel à un réseau de téléphone sans fil. Le document WO 01/29979 décrit une station d'accueil pour téléphone cellulaire. Le document EP 1 998 423 décrit un appareil de transfert d'énergie sans contact.

La présente invention vise à améliorer la situation décrite ci-dessus. A cet effet, l'invention propose un système de communication téléphonique comprenant une station d'accueil comportant un logement dans lequel peut être inséré un téléphone mobile, un combiné téléphonique utilisable en substitution du microphone et du haut-parleur d'un téléphone mobile inséré dans le logement, et une unité de commande incluant un clavier à touches utilisable en substitution du clavier du téléphone mobile inséré dans le logement.

Selon l'invention, la station d'accueil, le combiné téléphonique et l'unité de commande constituent trois modules distincts - respectivement, un module station d'accueil, un module combiné, et un module de commande - reliés entre eux par des moyens de fixation mécanique amovibles et des moyens de connexion électrique amovibles, le module combiné et le module station d'accueil étant adaptés pour être fixés de chaque côté du module de commande, leur position par rapport au module de commande étant interchangeable.

Un système de communication téléphonique selon l'invention, présentant une telle configuration modulaire modifiable, offre avantageusement la possibilité à un utilisateur d'adapter la position des modules latéraux, combiné et station d'accueil, selon qu'il est droitier ou gaucher. Ainsi, de manière générale, un utilisateur droitier positionnera le module station d'accueil à droite du module central de commande, et le module combiné, à gauche du module de commande (les notions de droite et gauche étant définies par rapport à un utilisateur regardant le système), tandis qu'un utilisateur gaucher inversera la position des modules latéraux précités.

Selon une caractéristique particulière de l'invention, le module de commande comporte :
- des moyens de connexion à un réseau de communication de type IP, et
- des moyens de sélection d'un mode de communication vocale sur le réseau de type IP ou sur un réseau de téléphonie mobile, ces moyens de sélection étant opérationnels lorsque le téléphone mobile inséré inclut un module de téléphonie de type voix sur IP.

Ainsi, le système de communication selon l'invention, outre le fait qu'il permet à un utilisateur disposant d'un téléphone mobile de pouvoir utiliser son téléphone mobile comme un téléphone fixe, c'est-à-dire en bénéficiant des avantages de la téléphonie fixe (combiné, clavier), permet également à l'utilisateur d'utiliser une seule plateforme de communication pour la téléphonie fixe (voix sur IP) et la téléphonie mobile.

Selon un mode de réalisation particulier, destiné à une application dans laquelle le réseau de téléphonie mobile est confondu avec le réseau de communication de type IP, les moyens de sélection de mode de communication vocale, sont adaptés à sélectionner au moins deux modes de communication correspondant respectivement à une identité téléphonique différente d'un utilisateur pour une même ligne téléphonique.

Ainsi, un système selon l'invention est compatible avec un standard de téléphonie tel que le standard de téléphonie mobile LTE dans lequel les réseaux de téléphonie mobile et fixe peuvent être confondus en un seul et même réseau de communication de type IP. En effet, dans une telle application de l'invention, l'utilisateur pourra par exemple utiliser au choix un pseudo numéro de téléphone fixe ou un pseudo numéro de téléphone mobile.

Selon une autre caractéristique de l'invention, le logement du module station d'accueil est conçu de telle manière à laisser apparente toute la face avant du terminal mobile lorsqu'il est inséré dans le logement.

Ainsi lorsque le téléphone mobile inséré dans la station d'accueil est un téléphone de type téléphone intelligent (*smartphone* en anglais), tel qu'un iPhone®, équipé d'un écran tactile, l'utilisateur peut manipuler l'écran et utiliser les fonctions du téléphone, de la même manière que si le téléphone était hors du logement de la station d'accueil.

Par ailleurs, selon une caractéristique de réalisation, le logement du module station d'accueil est conçu de telle sorte à incliner vers l'arrière le téléphone mobile inséré dans le logement, selon un angle d'inclinaison par rapport à la verticale, comparable à celui habituellement obtenu lorsque le téléphone mobile est utilisé par un utilisateur, téléphone en main.

Cette disposition présente en particulier l'avantage de permettre à l'utilisateur de manipuler de façon habituelle l'écran du terminal mobile inséré dans la station d'accueil, tout en utilisant simultanément le combiné, par exemple.

Selon un mode de réalisation particulier de l'invention, le système de communication peut comprendre plusieurs modules station d'accueil, fixés les uns aux autres par des moyens de fixation mécanique amovibles et reliés chacun par des moyens de connexion électrique amovibles au module de commande. Le module de commande est alors adapté à gérer la connexion électrique avec l'ensemble des modules station d'accueil, afin de déterminer le module station d'accueil destinataire d'une communication téléphonique entrante, et afin d'établir une communication sortante initiée par l'un des modules station d'accueil.

Le fait de disposer d'un système de communication pouvant comporter plusieurs modules stations d'accueil reliés les uns aux autres et connectés, par liaison filaire ou sans fils, avec le module de commande offre l'avantage de fournir, pour un ensemble de personnes - par exemple résidant dans une même habitation - une plateforme de communication unique, activée pour chaque personne dès lors que la personne considérée a inséré son téléphone mobile dans l'une des stations d'accueil.

Selon une autre caractéristique du système selon l'invention, le module station d'accueil dispose d'une face avant amovible, laquelle inclut un connecteur électrique destiné à être connecté à un modèle prédéfini de téléphone mobile, et un ensemble de touches de fonctions spécifiques à ce modèle de téléphone mobile.

Ainsi, si l'utilisateur change de téléphone mobile, il lui suffira d'acheter une nouvelle face avant adaptée à son nouveau modèle de téléphone mobile, pour pouvoir utiliser le système téléphonique avec son nouveau téléphone.

Selon d'autres caractéristiques de l'invention :
- le module de commande est adapté pour communiquer avec le téléphone mobile selon un mode de communication sans fil ;
- les moyens de connexion à un réseau de communication de type IP, du module de commande, comprennent des moyens de connexion filaire et des moyens de connexion sans fil à une passerelle d'accès au réseau de type IP.

L'invention sera mieux comprise à l'aide de la description suivante d'un mode de réalisation de l'invention donné à titre d'exemple, faite en se référant aux dessins annexés dans lesquels :
- la figure 1 représente un système de communication selon l'invention composé de trois modules distincts présentés sous forme disjointe ;
- la figure 2 représente le système de communication de la figure 1, assemblé selon une configuration pour droitier ;
- la figure 3 représente le système de communication de la figure 1, sur le point d'être assemblé selon une configuration pour gaucher ; et
- les figures 4a et 4b représentent respectivement une vue supérieure de trois quarts et une vue de profil du système de communication de la figure 1 ; et
- la figure 5 illustre des variantes d'utilisation du système de communication selon l'invention, selon lesquelles, d'une part, le module combiné peut ne pas être utilisé et, d'autre part, plusieurs modules station d'accueil peuvent être simultanément connectés au module de commande.

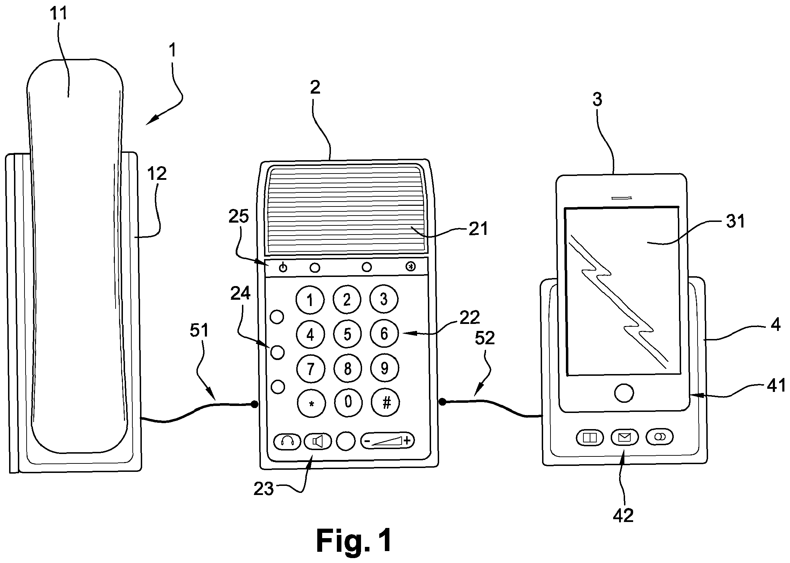

La **figure 1** représente un système de communication téléphonique modulaire selon l'invention. Le système de communication selon l'invention se composé de trois modules distincts et assemblables : un module combiné 1, un module de commande 2 et un module station d'accueil 4 dans lequel peut être inséré un téléphone mobile 3.

Le module combiné 1 se compose du combiné 11 proprement dit et d'un support de combiné 12. Le combiné 11 peut être relié au support par une liaison électrique filaire ou par une liaison sans fil, par exemple par liaison radio ou infrarouge, comme c'est le cas sur la figure 1.

Le module de commande 2 comprend un haut-parleur 21, un clavier à touches alphanumériques 22, un ensemble horizontal 23 de touches de fonctions, telles qu'une touche d'activation du haut-parleur pour écoute mains-libres, une touche d'activation de la sortie casque, une touche d'activation de la fonction sourdine (*mute* en anglais), une touche de variation du volume sonore de sortie (casque et haut-parleur).

Le module de commande 2 comprend par ailleurs un ensemble vertical 24 de touches de fonctions, parmi lesquelles, selon un exemple de réalisation, une touche de va-et-vient entre plusieurs communications simultanées (désignée par *call toggle* ou *call swap* en anglais), une touche de mise en attente d'une communication en cours, une touche de transfert d'appel.

Comme représenté par la référence 25 sur la figure 1, le module de commande 2 comporte également un ensemble horizontal de touches de fonctions. Dans le mode de réalisation choisi et illustré, ces touches sont sensitives et s'éclairent lorsqu'elles sont actives, jouant ainsi simultanément un rôle de voyant de fonctionnement du système téléphonique ; parmi ces touches, selon le mode de réalisation choisi, on trouve une touche de mise sous tension du système, une touche d'activation de sélection du mode de communication sur réseau IP, une touche de sélection du mode de communication sur réseau de téléphonie mobile, et une touche d'activation de la communication sans fil entre le module de commande et le téléphone mobile (connexion Bluetooth®). En pratique, ces touchent incorporent des diodes de type LED (*Light-Emitting Diodes*).

Le module de commande 2 inclut ainsi un équipement de connexion à un réseau de communication de type IP activable via une touche ou un bouton d'activation, par exemple inclus dans l'ensemble 25 de touches de fonctions, comme mentionné précédemment.

Selon un mode de réalisation particulier, la connexion du module de commande 2 au réseau IP est mise en œuvre via une passerelle d'accès à un réseau externe - par exemple une passerelle de type passerelle résidentielle, telle qu'une livebox® - à laquelle le module de commande 2 peut être relié, de manière classique, par une liaison sans fil (Wi-Fi) et/ou par une liaison filaire.

Le module de commande 2 inclut par ailleurs un équipement de sélection d'un mode de communication vocale sur réseau IP ou sur réseau de téléphonie mobile, cet équipement étant opérationnel lorsqu'un téléphone mobile est inséré dans le logement 41 du module station d'accueil 4. Selon le mode de réalisation envisagé, l'équipement de sélection du mode de communication vocale, sur réseau mobile ou sur réseau IP, est commandé par l'intermédiaire d'une touche ou un bouton de fonction situé sur le module de commande 2 - par exemple, un touche de l'ensemble 25 -, ou sur le module station d'accueil 4.

Selon un autre mode de réalisation de l'invention, compatible avec le standard de téléphonie mobile LTE (*Long Term Evolution*) dans lequel les réseaux de téléphonie mobile et fixe seront confondus en un seul et même réseau de communication de type IP - seuls les réseaux d'accès pourront être distincts - les moyens de sélection de mode de communication vocale précités, sont adaptés à sélectionner au moins deux modes de communication correspondant respectivement à des identités téléphoniques différentes d'un utilisateur pour une même ligne téléphonique. Par exemple, une première identité de l'utilisateur pourra correspondre à un pseudo numéro de téléphone mobile de l'utilisateur, et la seconde identité de l'utilisateur pourra correspondre à un pseudo numéro de téléphone fixe de l'utilisateur - l'expression « pseudo numéro » correspondant au fait, qu'en réalité, les deux numéros correspondent à la même ligne téléphonique. Selon un autre exemple, une première identité pourra correspondre à un numéro de téléphone privé tandis que la seconde identité pourra correspondre à un numéro de téléphone professionnel.

Le troisième module du système de communication selon l'invention, c'est-à-dire le module station d'accueil 4, comprend quant à lui, un logement 41 destiné à recevoir un téléphone mobile 3, ainsi que dans le mode de réalisation décrit, un ensemble 42 de touches de fonctions, telles que par exemple une touche d'accès au répertoire du téléphone mobile, un touche de consultation des messages (SMS, messages vocaux) et une touche de rappel du dernier numéro (*redial* en anglais).

Avantageusement, selon l'invention, la face avant de la station d'accueil 4, comportant l'ensemble 42 de touches, est amovible et est spécifique à un modèle de téléphone mobile 3. Ainsi, si l'utilisateur change de téléphone mobile, il lui suffira d'acheter une nouvelle face avant adaptée à son nouveau modèle de téléphone mobile. Chacune des touches de l'ensemble 42, lorsqu'elle est activée, envoie un signal électrique - via la connexion filaire 52 - au module de commande 2, qui traite le signal reçu et transmet un signal de commande au téléphone mobile 3, via la connexion sans fil, Bluetooth®, entre le module central 2 et le téléphone mobile 3. Les touches de fonction de l'ensemble 42 peuvent être ainsi dédiées au déclenchement d'actions liées aux communications téléphoniques, mais peuvent être également configurées pour déclencher le lancement d'applications prédéfinies sur le téléphone mobile, autres que celles liées spécifiquement à la téléphonie, telles que par exemple des applications relatives à un annuaire, à la gestion de contacts, à un agenda, à la consultation de documents, à l'écoute de musique, etc.

Conformément à l'invention, les trois modules constitutifs du système de communication sont reliés entre eux par des moyens de fixation mécanique amovibles et des moyens de connexion électrique amovibles.

Les moyens de fixation mécaniques amovibles (non représentés sur les dessins) sont constitués par exemple par des clips, c'est-à-dire des éléments de fixation par pince formant ressort. Ainsi, le support 12 du module combiné 1, et le module station d'accueil 4 sont « clipsés » respectivement sur chaque côté du module de commande 2.

Par ailleurs, dans le mode de réalisation illustré, les modules latéraux - support combiné 12 et station d'accueil 4 - sont reliés respectivement au module central de commande 2 par des connexions électriques filaires 51, 52. Ces connexions filaires comportent à leurs extrémités des éléments de connexion amovibles, par exemple de type connecteurs mâle/femelle.

Les connexions filaires sont chargées d'une part d'alimenter électriquement chacun des modules latéraux à partir du module central, et d'autre part d'acheminer les signaux de communication entre les différents modules.

Selon un autre mode de réalisation, les modules latéraux et le module central ne sont reliés par aucune connexion filaire. Dans ce cas, l'alimentation électrique de chacun des modules latéraux est assurée par une technique de transmission d'énergie sans fil du type à champ proche, du module central vers chacun des modules latéraux, par exemple par couplage inductif. De plus, dans ce mode de réalisation, la transmission des signaux de communication entre chacun des modules latéraux et le module central, utilise des moyens de communication sans fil de type radio courte distance, par exemple conforme à la spécification Bluetooth®.

Par ailleurs, dans le mode de réalisation décrit, le module central de commande 2 comporte un équipement de communication sans fil adapté notamment à faire communiquer le clavier à touches 22 avec le téléphone mobile 3, inséré dans la station d'accueil 4. De tels moyens de communications sans fil sont connus en soi, en particulier dans le domaine de l'automobile avec les kits téléphone mains libres (Bluetooth® par exemple).

Comme on peut le voir sur la figure 1, le logement 41 du module station d'accueil 4 est conçu de telle manière à laisser apparente toute la face avant du terminal mobile lorsqu'il est inséré dans le logement. Ainsi lorsque le téléphone mobile inséré dans la station d'accueil est un téléphone de type téléphone intelligent (*smartphone* en anglais), tel qu'un iPhone®, équipé d'un écran tactile (31), l'utilisateur peut manipuler l'écran 31 et utiliser les fonctions du téléphone, de la même manière que si le téléphone était hors du logement de la station d'accueil.

Le logement 41 de la station d'accueil 4 comporte un connecteur électrique, connu en soi (non représenté sur les figures), compatible avec celui (non représenté) situé sur la tranche inférieure du téléphone mobile 3. Par conséquent une station d'accueil 4 est adaptée à recevoir un téléphone mobile d'un type donné, défini notamment par son type de connecteur. On pourra prévoir de monter de façon amovible le connecteur situé dans le logement 41 de la station d'accueil, afin de pouvoir le remplacer par un connecteur d'un autre type, adapté à celui d'un téléphone mobile d'un type différent (mais de forme similaire). En pratique, le connecteur est solidaire de la face avant amovible de la station d'accueil, qui comporte les touches 42, et est donc changé en même temps que cette dernière, pour correspondre à un modèle différent de téléphone mobile.

Selon un autre mode de réalisation, le logement 41 de la station d'accueil 4 ne comporte pas de connecteur électrique compatible avec celui du téléphone mobile 3. Dans ce mode de réalisation, le logement 41 est équipé d'un élément de transmission d'énergie sans contact entre le logement et le téléphone mobile - du type à champ proche, par exemple par couplage inductif -, assurant ainsi l'alimentation électrique du téléphone mobile. Le terminal mobile 3 est alors équipé d'un élément spécifique de réception d'une telle énergie transmise par couplage inductif. Cet élément de réception d'énergie pourra être, selon le cas, intégré d'origine dans le corps du téléphone, ou bien intégré dans une coque additionnelle entourant le téléphone. Dans ce mode de réalisation, la communication entre le téléphone mobile 3 et la station d'accueil 4 est mise en œuvre par des moyens de communication sans fil de type radio courte distance, par exemple conforme à la spécification Bluetooth®, équipant respectivement le téléphone mobile et la station d'accueil. Ce mode de réalisation présente notamment l'avantage de rendre le logement 41 compatible avec n'importe quel type de téléphone mobile 3, sous réserve que le logement 41 soit de dimensions suffisantes pour recevoir un téléphone mobile considéré.

Conformément à l'invention, le téléphone mobile 3 dépasse du logement 41 de telle sorte à permettre à l'utilisateur de pouvoir manipuler l'écran tactile 31 du téléphone en place dans le logement, avec la main droite - la configuration de la figure 1 étant adaptée à un droitier -, de la même manière que s'il tenait le téléphone dans sa main droite, en utilisant le pouce droit pour agir sur l'écran, selon la manipulation habituelle de ce type de *smartphone.*

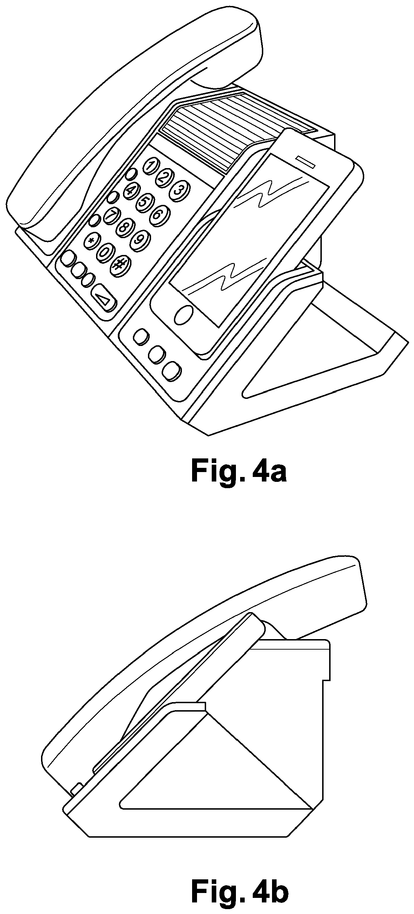

Par ailleurs, le logement 41 de la station d'accueil 4 est conçu de telle sorte à incliner vers l'arrière le téléphone 3 inséré dans le logement, selon un angle d'inclinaison par rapport à la verticale, comparable à celui habituellement obtenu lorsqu'un tel téléphone est utilisé par un utilisateur, le téléphone en main. Dans le mode de réalisation exposé, cet angle d'inclinaison est d'environ 45 degrés, comme représenté sur les **figures 4a** et **4b** qui représentent respectivement une vue supérieure de trois quarts et une vue de profil, du système de communication de la figure 1. Bien sûr, les dispositions qui précèdent sont applicables à l'utilisation du téléphone mobile 3 par un gaucher, lorsque la station d'accueil 4 est placée à gauche du module de commande 2.

Comme exposé précédemment, les trois modules distincts constitutifs du système de communication selon l'invention, c'est-à-dire la station d'accueil 4, le combiné téléphonique 1 et l'unité de commande 2 constituent trois modules distincts, reliés entre eux par des moyens de fixation mécanique amovibles et des moyens de connexion électrique amovibles. Le module combiné 1 et le module station d'accueil 4 sont adaptés pour être fixés de chaque côté du module de commande 2, et conformément à l'invention, leur position par rapport au module de commande est interchangeable. Par conséquent, un tel système de communication téléphonique permet à l'utilisateur d'adapter la position des modules latéraux, combiné et station d'accueil, selon qu'il est droitier ou gaucher. De manière générale, un utilisateur droitier positionnera le module station d'accueil 4 à droite du module central de commande 2, et le module combiné 1, à gauche du module de commande 2 (les notions de droite et gauche étant définies par rapport à un utilisateur regardant le dispositif de communication). A l'inverse, un utilisateur gaucher inversera la position des modules latéraux précités.

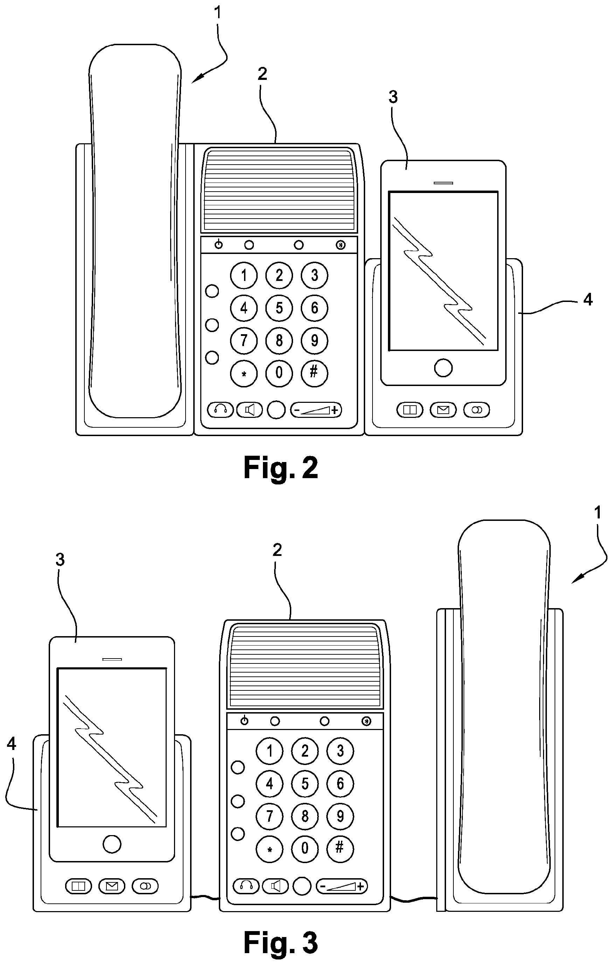

La **figure 2** représente ainsi le système de communication de la figure 1, assemblé selon une configuration pour droitier. L'utilisateur droitier pourra utiliser le combiné 1 avec sa main gauche, tandis qu'il pourra, avec sa main droite, manipuler le clavier (22) du module central 2 ou bien l'écran tactile (31) du terminal mobile 3.

La **figure 3** représente quant à elle le système de communication de la figure 1, sur le point d'être assemblé selon une configuration pour gaucher, avec les modules combiné 1 et station d'accueil 4 respectivement à droite et à gauche du module de commande 2.

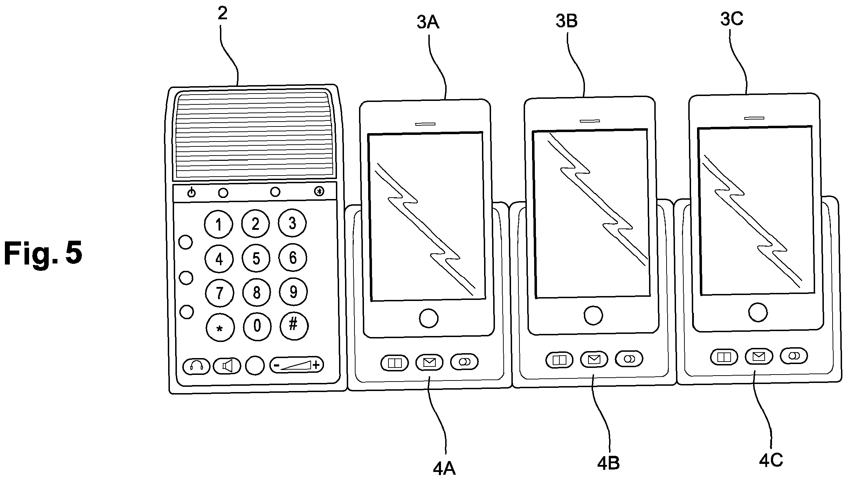

La **figure 5** illustre des variantes d'utilisation du système de communication selon l'invention, selon lesquelles, d'une part, le module combiné peut ne pas être utilisé et, d'autre part, plusieurs modules station d'accueil peuvent être simultanément connectés au module de commande.

Afin d'illustrer encore mieux l'aspect modulaire du système de communication selon l'invention, dans le mode de réalisation représenté sur la figure 5, d'une part, le module combiné (1) n'est pas utilisé, et d'autre part, plusieurs modules stations d'accueil 4A, 4B, 4C sont liées mécaniquement les unes aux autres, et reliées, chacune, électriquement au module de commande 2 (en utilisant des moyens de liaison et de connexion amovibles tels que précédemment mentionnés).

Le module combiné (1) n'étant pas utilisé dans la configuration présentée, le ou les utilisateurs peuvent utiliser leur téléphone mobile inséré dans une station d'accueil en mode main libre en utilisant le haut-parleur (21) et un microphone intégré (non représenté), incorporé dans le module de commande ou dans la station d'accueil.

Dans ce mode de réalisation de l'invention, dans lequel le système de communication peut comprendre plusieurs modules station d'accueil, fixés les uns aux autres par des moyens de fixation mécanique amovibles et reliés chacun par des moyens de connexion électrique amovibles au module de commande, le module de commande 2 est alors adapté à gérer la connexion électrique avec l'ensemble des modules station d'accueil 4A-4C, afin de déterminer le module station d'accueil (4A-AC), c'est-à-dire le téléphone mobile (3A, 3B ou 3C), destinataire d'une communication téléphonique entrante, et afin d'établir une communication sortante initiée par l'un des téléphones 3A-3C.

Une telle configuration d'un système de communication selon l'invention est particulièrement adaptée à un environnement - résidentiel ou professionnel - dans lequel plusieurs personnes disposant chacune d'un téléphone mobile partagent une passerelle d'accès à un réseau IP externe. En effet, une telle configuration permet à l'ensemble de ces personnes de disposer d'une plateforme de communication unique, activée pour chaque personne dès lors que la personne considérée a inséré son téléphone mobile (3A-3C) dans l'une des stations d'accueil (4A-4C).

## Revendications

1. Système de communication téléphonique comprenant une station d'accueil comportant un logement dans lequel peut être inséré un téléphone mobile (3), un combiné téléphonique utilisable en substitution du microphone et du haut-parleur d'un téléphone mobile inséré dans le logement, et une unité de commande incluant un clavier à touches utilisable en substitution du clavier du téléphone mobile inséré dans le logement,
le système étant **caractérisé en ce que** la station d'accueil, le combiné téléphonique et l'unité de commande constituent trois modules distincts - respectivement, un module station d'accueil (4), un module combiné (1), et un module de commande (2) - reliés entre eux par des moyens de fixation mécanique amovibles et des moyens (51, 52) de connexion électrique amovibles, le module combiné (1) et le module station d'accueil (4) étant adaptés pour être fixés de chaque côté du module de commande (2), leur position par rapport au module de commande étant interchangeable,
les moyens de fixation mécanique amovibles étant constitués par des clips, un support du module combiné (1) et le module station d'accueil (4) étant clipsés respectivement sur chaque côte du module de commande (2), les clips étant des éléments de fixation par pince formant ressort.

2. Système selon la revendication 1, dans lequel le module de commande comporte :
- des moyens de connexion à un réseau de communication de type IP, et
- des moyens de sélection d'un mode de communication vocale sur le réseau de type IP ou sur un réseau de téléphonie mobile, ces moyens de sélection étant opérationnels lorsque le téléphone mobile inséré inclut un module de téléphonie de type voix sur IP.

3. Système selon la revendication 2, ledit système étant compatible avec le standard de téléphonie LTE selon lequel le réseau de téléphonie mobile et le réseau de communication de type IP sont confondus en un seul et même réseau de communication de type IP, dans lequel lesdits moyens de sélection de mode de communication vocale sont adaptés à sélectionner au moins deux modes de communication correspondant respectivement à une identité téléphonique différente pour une même ligne téléphonique d'un utilisateur.

4. Système selon l'une quelconque des revendications 1 à 3, dans lequel le logement du module station d'accueil comprend des moyens pour laisser apparente toute la face avant du terminal mobile lorsqu'il est inséré dans le logement.

5. Système selon l'une quelconque des revendications 1 à 4, comprenant une pluralité de modules station d'accueil (3A, 3B, 3C) fixés les uns aux autres par des moyens de fixation mécanique amovibles et reliés chacun, par des moyens de connexion électrique amovibles, au module de commande (2), lequel comporte des moyens pour gérer la connexion électrique avec ladite pluralité de modules station d'accueil, et des moyens pour déterminer le module station d'accueil destinataire d'une communication téléphonique entrante, et des moyens pour établir une communication sortante initiée par l'un desdits modules station d'accueil.

6. Système selon l'une quelconque des revendications 1 à 5, dans lequel le module de commande est adapté pour communiquer avec le téléphone mobile selon un mode de communication sans fil.

7. Système selon l'une quelconque des revendications 2 à 6, dans lequel les moyens de connexion à un réseau de communication de type IP, du module de commande, comprennent des moyens de connexion filaire et des moyens de connexion sans fil à une passerelle d'accès audit réseau de type IP.

8. Système selon l'une quelconque des revendications 1 à 7, dans lequel le logement (41) du module station d'accueil (4) comprend des moyens pour incliner vers l'arrière ledit téléphone mobile (3) inséré dans le logement (41), selon un angle d'inclinaison par rapport à la verticale, comparable à celui habituellement obtenu lorsque le téléphone mobile est utilisé par un utilisateur, téléphone en main.

9. Système selon l'une quelconque des revendications 1 à 8, dans lequel le module station d'accueil (4) dispose d'une face avant amovible, laquelle inclut un connecteur électrique destiné à être connecté à un modèle prédéfini de téléphone mobile, et un ensemble (42) de touches de fonctions spécifiques audit modèle de téléphone mobile.

10. Système selon l'une quelconque des revendications 1 à 8, dans lequel le module station d'accueil (4) est équipé d'un élément de transmission d'énergie sans contact entre le logement et un téléphone mobile inséré dans le logement, assurant l'alimentation électrique du téléphone mobile, lequel étant équipé d'un élément spécifique de réception d'une telle énergie transmise sans contact.

## Patentansprüche

1. Telefonkommunikationssystem, umfassend eine Andockstation mit einer Aufnahme, in die ein Mobiltelefon (3) eingesetzt werden kann, einen Telefonhörer, der als Ersatz für das Mikrofon und den Lautsprecher eines in die Aufnahme eingesetzten Mobiltelefons verwendbar ist, und eine Steuereinheit, die eine Tastatur mit Tasten beinhaltet, die als Ersatz für die Tastatur des in die Aufnahme eingesetzten Mobiltelefons verwendbar ist,
wobei das System **dadurch gekennzeichnet ist, dass** die Andockstation, der Telefonhörer und die Steuereinheit drei verschiedene Module bilden - ein Andockstationsmodul (4), ein Hörermodul (1) bzw. ein Steuermodul (2) -, die untereinander mit lösbaren Mitteln zur mechanischen Befestigung und mit lösbaren Mitteln (51, 52) zum elektrischen Anschließen verbunden sind, wobei das Hörermodul (1) und das Andockstationsmodul (4) dazu geeignet sind, auf jeder Seite des Steuermoduls (2) befestigt zu werden, wobei ihre Position in Bezug auf das Steuermodul austauschbar ist,
wobei die lösbaren Mittel zur mechanischen Befestigung aus Klipsen bestehen, wobei eine Halterung des Hörermoduls (1) und das Andockstationsmodul (4) zu beiden Seiten des Steuermoduls (2) angeklipst sind, wobei die Klipse Federklammer-Befestigungselemente sind.

2. System nach Anspruch 1, wobei das Steuermodul umfasst:
- Mittel zum Anschließen an ein IP-Kommunikationsnetz und
- Mittel zum Auswählen eines Sprachkommunikationsmodus über das IP-Netz oder über ein Mobilfunknetz, wobei diese Auswählmittel aktiviert sind, wenn das eingesetzte Mobiltelefon ein Voice-over-IP-Telefoniemodul beinhaltet.

3. System nach Anspruch 2, wobei das System zum Telefonstandard LTE kompatibel ist, gemäß dem das Mobilfunknetz und das IP-Kommunikationsnetz zu einem einzigen IP-Kommunikationsnetz verschmelzen, wobei die Mittel zum Auswählen des Sprachkommunikationsmodus dazu geeignet sind, mindestens zwei Verbindungsmodi zu wählen, die jeweils einer unterschiedlichen Telefonidentität für dieselbe Telefonleitung eines Benutzers entsprechen.

4. System nach einem der Ansprüche 1 bis 3, wobei die Aufnahme des Andockstationsmoduls Mittel umfasst, um die gesamte Vorderseite des mobilen Endgeräts sichtbar zu lassen, wenn es in die Aufnahme eingesetzt ist.

5. System nach einem der Ansprüche 1 bis 4, umfassend eine Mehrzahl von Andockstationsmodulen (3A, 3B, 3C), die über lösbare Mittel zur mechanischen Befestigung aneinander befestigt sind und von denen jedes über lösbare Mittel zum elektrischen Anschließen mit dem Steuermodul (2) verbunden ist, das Mittel, um den elektrischen Anschluss mit der Mehrzahl von Andockstationsmodulen zu verwalten, und Mittel, um das Andockstationsmodul zu bestimmen, für das eine eingehende Telefonverbindung bestimmt ist, und Mittel, um eine von einer der Andockstationsmodule eingeleitete abgehende Verbindung aufzubauen, beinhaltet.

6. System nach einem der Ansprüche 1 bis 5, wobei das Steuermodul geeignet ist, mit dem Mobiltelefon über einen Drahtlos-Verbindungsmodus zu kommunizieren.

7. System nach einem der Ansprüche 2 bis 6, wobei die Mittel zum Anschließen des Steuermoduls an ein IP-Kommunikationsnetz drahtgebundene Anschlussmittel und drahtlose Anschlussmittel an ein Zugangsgateway zu dem IP-Netz umfassen.

8. System nach einem der Ansprüche 1 bis 7, bei dem die Aufnahme (41) des Andockstationsmoduls (4) Mittel umfasst, um das in die Aufnahme (41) eingesetzte Mobiltelefon (3) um einen Neigungswinkel in Bezug auf die Vertikale nach hinten zu neigen, der mit dem vergleichbar ist, der für gewöhnlich erhalten wird, wenn das Mobiltelefon von einem Benutzer mit dem Telefon in der Hand verwendet wird.

9. System nach einem der Ansprüche 1 bis 8, bei dem das Andockstationsmodul (4) über eine lösbare Vorderseite verfügt, die einen elektrischen Steckverbinder, der dazu bestimmt ist, an ein vorgegebenes Mobiltelefonmodell angeschlossen zu werden, und eine Anordnung (42) von spezifischen Funktionstasten für das Mobiltelefonmodell beinhaltet.

10. System nach einem der Ansprüche 1 bis 8, bei dem das Andockstationsmodul (4) mit einem Element zur kontaktlosen Energieübertragung zwischen der Aufnahme und einem in die Aufnahme eingesetzten Mobiltelefon ausgestattet ist, das die Stromversorgung des Mobiltelefons gewährleistet, das mit einem spezifischen Element zum Empfangen einer solchen kontaktlos übertragenen Energie ausgestattet ist.

## Claims

1. Telephonic communication system comprising a docking station including a dock into which a mobile telephone (3) may be inserted, a telephone handset usable instead of the microphone and loudspeaker of a mobile telephone inserted into the dock, and a control unit including a keypad usable instead of the keypad of the mobile telephone inserted into the dock,
the system being **characterized in that** the docking station, the telephone handset and the control unit form three separate modules - a docking-station module (4), a handset module (1), and a control module (2), respectively - that are connected together by removable mechanical fastening means and removable electrical connecting means (51, 52), the handset module (1) and the docking-station module (4) being suitable for being fastened to each side of the control module (2), their position with respect to the control module being interchangeable,
the removable mechanical fastening means consisting of clips, a holder of the handset module (1) and the docking-station module (4) being snap-fastened respectively to each side of the control module (2), the clips being clip-fastening elements that form springs.

2. System according to Claim 1, wherein the control module comprises:
- means for connecting to an IP communication network, and
- means for selecting a mode for making voice communications over the IP network or over a mobile-telephone network, these selecting means being turned on when the inserted mobile telephone includes a voice-over-IP telephony module.

3. System according to Claim 2, said system being compatible with the LTE telephony standard, according to which the mobile-telephone network and the IP communication network are one and the same IP communication network, wherein said means for selecting a mode for making voice communications are suitable for selecting at least two communication modes, each respectively corresponding to a different telephonic identity for a given telephone line of a user.

4. System according to any one of Claims 1 to 3, wherein the dock of the docking-station module comprises means for leaving the entire front face of the mobile terminal visible when it is inserted into the dock.

5. System according to any one of Claims 1 to 4, comprising a plurality of docking-station modules (3A, 3B, 3C) that are fastened to one another by removable mechanical fastening means and each connected, by removable electrical connecting means, to the control module (2), which comprises means for managing the electrical connection with said plurality of docking-station modules, and means for determining the docking-station module intended to receive an incoming telephone communication, and means for setting up an outgoing communication initiated by one of said docking-station modules.

6. System according to any one of Claims 1 to 5, wherein the control module is suitable for communicating with the mobile telephone in a wireless communication mode.

7. System according to any one of Claims 2 to 6, wherein the means for connecting to an IP communication network of the control module comprise wired means and wireless means for connecting to a gateway providing access to said IP network.

8. System according to any one of Claims 1 to 7, wherein the dock (41) of the docking-station module (4) comprises means for inclining said mobile telephone (3) inserted into the dock (41) backward, to an angle of inclination with respect to the vertical that is comparable to that conventionally obtained when the mobile telephone is used by a user, telephone in hand.

9. System according to any one of Claims 1 to 8, wherein the docking-station module (4) has a removable front face, which includes an electrical connector intended to be connected to a predefined model of mobile telephone, and a set (42) of function keys specific to said model of mobile telephone.

10. System according to any one of Claims 1 to 8, wherein the docking-station module (4) is equipped with an element for contactlessly transmitting power between the dock and a mobile telephone inserted into the dock, to supply electrical power to the mobile telephone, the latter being equipped with a specific element for receiving such wirelessly transmitted power.
